# EUROPÄISCHE PATENTSCHRIFT

(11) **EP 2 558 541 B1**
(45) Veröffentlichungstag und Bekanntmachung des Hinweises auf die Patenterteilung: **11.09.2013**
(21) Anmeldenummer: 11714018.6
(22) Anmeldetag: 06.04.2011
(51) Int. Cl.: C09D 5/00

(54) **OBERFLÄCHENBEHANDLUNG VON ZEMENTÄREN UNTERGRÜNDEN**
SURFACE TREATMENT OF CEMENTITIOUS SUBSTRATES
TRAITEMENT DE SURFACE DE FONDS À BASE DE CIMENT

(30) Priorität: 13.04.2010 DE 102010003919
(43) Veröffentlichungstag der Anmeldung: 20.02.2013
(73) Patentinhaber: Wacker Chemie AG, 81737 München (DE)
(72) Erfinder: HOFFMANN, Armin, 84524 Neuötting (DE); BEZLER, Jürgen, 84489 Burghausen (DE); BONIMEIER, Stefan, 84518 Garching (DE)
(74) Vertreter: Ege, Markus
(86) Internationale Anmeldenummer: PCT/EP2011/055298
(87) Internationale Veröffentlichungsnummer: WO 2011/128232

(56) Entgegenhaltungen:
- EP-A1- 0 496 682
- WO-A1-02/088260
- WO-A2-02/090428
- DE-A1-102007 034 865
- US-A1- 2004 134 378
- US-A1- 2010 034 978

## Beschreibung

Die Erfindung betrifft die Verwendung von Trockenbaustoffen zur Oberflächenbehandlung von zementären Untergründen, Verfahren zur Oberflächenbehandlung von zementären Untergründen sowie die so erhältlichen oberflächenbehandelten zementären Untergründe.

Zementäre Untergründe sind erhältlich durch Beschichten von Substraten mit wässrigen Massen auf Basis von Zement, Füllstoffen und gegebenenfalls Additiven. Zementäre Untergründe sind offenporig und bedürfen zur Verbesserung ihrer mechanischen Eigenschaften und zur Verringerung ihrer Verschmutzungsneigung einer Nachbehandlung, beispielsweise einer Versiegelung oder einer Beschichtung mit einer nichtporösen Schicht. Die DE-A 2111362 empfiehlt hierfür die Beschichtung von ausgehärtetem Beton mit selbsthärtenden, flüssigen Beschichtungsmitteln auf Grundlage von polymerisierbaren organischen Verbindungen, Härtern und gegebenenfalls weiteren organischen Polymeren. Die JP 59051957 empfiehlt zur Versiegelung von Wänden den Einsatz von pastösen, wässrigen Massen enthaltend organische Polymerisate und hydraulisch abbindende Bindemittel. Aus der DE-A 60100076 sind Verfahren zur Herstellung von Industrieböden bekannt, bei denen ein Betonestrich mit einem pastösen Beschichtungsmittel aus Steingut, einem härtbaren, epoxidhaltigen Kunststoffharz, einem Härter sowie einem verflüssigenden Bindemittel überzogen wird und durch Aushärten eine Beschichtung erhalten wird. Die WO-A 2006/095346 beschreibt schließlich die Beschichtung von Oberflächen mit dekorativen Schutzschichten auf Basis von Polymerharzen, farbigen Partikeln sowie Glaspartikeln.

Vor diesem Hintergrund bestand weiterhin die Aufgabe, effiziente Maßnahmen zur Oberflächenbehandlung von zementären Untergründen bereitzustellen, die zu einer Verbesserung der mechanischen Eigenschaften, insbesondere der Abriebsbeständigkeit, und einer Verringerung der Verschmutzungsneigung der zementären Untergründe führen sollten, wobei nach Möglichkeit keine voluminöse Schicht auf die zementären Untergründe appliziert werden sollte.

Überraschenderweise wurde die Aufgabe durch Oberflächenbehandlung von zementären Untergründen mit Trockenbaustoffen gelöst, wobei die Trockenbaustoffe Polymere in Form von in Wasser redisperierbaren Pulvern und gegebenenfalls weitere Bestandteile enthalten. Entscheidend ist hierbei, dass die zementären Untergründe während der Oberflächenbehandlung mit den Trockenbaustoffen noch nicht vollständig abgebunden sind. Unter Trockenbaustoffen werden keine flüssigen oder pastösen Zusammensetzungen verstanden.

Ein Gegenstand der Erfindung ist die Verwendung von Trockenbaustoffen enthaltend ein oder mehrere Polymere in Form von in Wasser redispergierbaren Pulvern und gegebenenfalls mineralische Bindemittel, gegebenenfalls Füllstoffe sowie gegebenenfalls Additive zur Oberflächenbehandlung von noch nicht vollständig abgebundenen zementären Untergründen.

Noch nicht vollständig abgebundene zementäre Untergründe sind im Allgemeinen erhältlich, indem zementäre Massen auf Basis von Zement, Füllstoffen, Wasser und gegebenenfalls Additiven appliziert werden, mit der Maßgabe, dass die zementären Untergründe zumindest teilweise abgebunden sind, aber noch Restwasser von den zementären Massen enthalten. Der Begriff des Abbindens von zementären Massen ist dem Fachmann bekannt. Die erfindungsgemäß eingesetzten zementären Untergründe sind also im Allgemeinen teilweise abgebunden, aber noch nicht vollständig abgebunden. Die noch nicht vollständig abgebundenen zementären Untergründe können auch als erstarrt, aber noch nicht vollständig ausgehärtet oder nicht vollständig getrocknet charakterisiert werden. Dieser Zustand der noch nicht vollständig abgebundenen zementären Untergründe kann sich beispielsweise dadurch äußern, dass die Untergründe durch Personen begehbar sind, ohne dass die Personen in die zementären Untergründe einsinken. Für gewöhnlich wird die Oberfläche der zementären Untergründe beim Begehen nicht einmal nennenswert verformt.

Die Dauer des Abbindens bis zum Erhalt von noch nicht vollständig abgebundenen zementären Untergründen hängt von der Umgebungstemperatur, der Luftfeuchtigkeit sowie der konkreten Zusammensetzung der zementären Massen ab, beispielsweise vom Einsatz von Additiven wie Abbindebeschleuniger oder Abbindeverzögerer, und kann folglich aus technischen Gründen nicht sinnvoll durch exakte Zeiträume definiert werden.

Die noch nicht vollständig abgebundenen zementären Untergründe können mit einem Abbindeparameter charakterisiert werden, gemäß dem ein Körper, der eine Grundfläche von 350 bis 400 cm² und eine Höhe von 20 cm sowie eine Masse von 60 kg hat, 30 Sekunden nach Ablegen mit seiner Grundfläche auf einen noch nicht vollständig abgebundenen zementären Untergrund unter Normalbedingungen nach DIN50014 um 0 bis 5 mm, vorzugsweise 0,1 bis 3 mm und besonders bevorzugt 1 bis 2 mm in den zementären Untergrund einsinkt.

Als Polymere werden im Allgemeinen Polymerisate von einem oder mehreren ethylenisch ungesättigten Monomeren eingesetzt. Bevorzugte ethylenisch ungesättigte Monomere werden ausgewählt aus der Gruppe umfassend Vinylester, (Meth)acrylsäureester, Vinylaromaten, Olefine, 1,3-Diene und Vinylhalogenide und gegebenenfalls weiteren damit copolymerisierbaren Monomeren.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Bevorzugt werden ein oder mehrere Polymerisate ausgewählt aus der Gruppe umfassend Vinylester-Homopolymerisate, Vinylester-Mischpolymerisate enthaltend eine oder mehrere Monomereinheiten aus der Gruppe der Vinylester, Olefine, Vinylaromaten, Vinylhalogenide, Acrylsäureester, Methacrylsäureester, Fumar- und/oder Maleinsäuremono- oder -diester; (Meth)acrylsäureester-Homopolymerisate, (Meth)-acrylsäureester-Mischpolymerisate enthaltend eine oder mehrere Monomereinheiten aus der Gruppe der Methacrylsäureester, Acrylsäureester, Olefine, Vinylaromaten, Vinylhalogenide, Fumar- und/oder Maleinsäuremono- oder -diester; Homo- oder Mischpolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert sein können; Homo- oder Mischpolymerisate von Vinylaromaten, wie Styrol, Methylstyrol, Vinyltoluol; Homo- oder Mischpolymerisate von Vinylhalogenverbindungen wie Vinylchlorid.

Besonders bevorzugt werden Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von ein oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Besonders bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/ oder 2-Ethylhexylacrylat; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Beispiele für besonders bevorzugte Comonomere für Vinylchlorid-Mischpolymerisate sind α-Olefine, wie Ethylen oder Propylen, und/ oder Vinylester, wie Vinylacetat, und/oder Acrylsäureester bzw. Methacrylsäureester von Alkoholen mit 1 bis 15 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder Fumar- und/oder Maleinsäuremono- oder -diester wie die Dimethyl-, Methyl-t-butyl-, Di-n-butyl-, Di-t-Butyl- und Diethylester der Maleinsäure bzw. Fumarsäure.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Am meisten bevorzugte Mischpolymerisate sind auch Vinylchlorid-Ethylen-Mischpolymerisate enthaltend 60 bis 99 Gew.-% Vinylchlorideinheiten und 1 bis 40 Gew.-% Ethyleneinheiten, wobei sich die Angaben in Gew.-% auf das Gesamtgewicht des Copolymerisats beziehen und sich jeweils auf 100 Gew.-% addieren. Solche Vinylchlorid-Ethylen-Copolymerisate sind aus EP 0 149 098 A2 bekannt.

Die Monomerauswahl bzw. die Auswahl der Gewichtsanteile der Comonomere erfolgt dabei so, das eine Glasübergangstemperatur Tg von -50°C bis +50°C, vorzugsweise -25°C bis +25°C, besonders bevorzugt -20°C bis +10°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymere erfolgt in wässrigem Medium und bevorzugt nach dem Emulsions- oder Suspensionspolymerisationsverfahren - wie beispielsweise in DE-A 102008043988 beschrieben. Die Polymere fallen dabei in Form von wässrigen Dispersionen an. Bei der Polymerisation können die gängigen Schutzkolloide und/oder Emulgatoren eingesetzt werden, wie in der DE-A 102008043988 beschrieben. Die Schutzkolloide können anionisch oder vorzugweise kationisch oder nichtionisch sein. Bevorzugt sind auch Kombinationen von kationischen und nichtionischen Schutzkolloiden. Bevorzugte nichtionische Schutzkolloide sind Polyvinylalkohole. Bevorzugte kationische Schutzkolloide sind Polymere, die ein oder mehrere kationische Ladungen tragen, wie beispielsweise in E. W. Flick, Water Soluble Resins - an Industrial Guide, Noyes Publications, Park Ridge, N.J., 1991, beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymere in Form von wässrigen Dispersionen können wie in der DE-A 102008043988 beschrieben in entsprechende in Wasser redispergierbare Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Als Polymere können auch ein oder mehrere hydrophobe Polymerzusammensetzungen in Form von in Wasser redispergierbaren Pulvern eingesetzt werden.

Bevorzugte hydrophobe Polymerzusammensetzungen in Form von in Wasser redispergierbare Pulver enthalten
a) ein oder mehrere der oben genannten Polymere in Form von in Wasser redispergierbaren Pulvern, und
b) ein oder mehrere Organosiliziumverbindungen, oder
c) eine oder mehrere Fettsäuren und/oder Fettsäurederivate, oder eine Kombination der Komponenten a), b) und c).

Bevorzugte Organosiliziumverbindungen b) sind Kieselsäureester Si(OR')₄, Silane wie Tetraorganosilane SiR₄ und Organoorganoxysilane SiRₙ(OR')₄₋ₙ mit n = 1 bis 3, Polysilane mit vorzugsweise der allgemeinen Formel R₃Si(SiR₂)ₙSiR₃ mit n = 0 bis 500, Organosilanole SiRₙ(OH)₄₋ₙ, Disiloxane, Oligosiloxane, Polysiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und wobei die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Chlor, mit Ether-, Thioether-, Ester-, Amid-, Nitril- , Hydroxyl-, Amin-, Carboxyl-, Sulfonsäure-, Carbonsäureanhydrid und Carbonyl-Gruppen substituiert sein können, und wobei im Fall der Polysilane R auch die Bedeutung OR' haben kann.

Bevorzugte Organosiliziumverbindungen b) sind auch Carbosilane, Polycarbosilane, Carbosiloxane, Polycarbosiloxane oder Polysilylendisiloxane sowie auch Cyclosiloxane.

Besonders bevorzugte Organosiliziumverbindungen b) sind Tetramethoxysilan, Tetraethoxysilan, Methyltripropoxysilan, Methyltri(ethoxy-ethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Dipropyldiethoxysilan, Methylphenyldiethoxysilan, Diphenyldimethoxysilan, Methylvinyltri-(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxanund Methylhydrogensiloxan-Einheiten, Dimethylpolysiloxane, sowie Dimethylpolysiloxane mit Si-OH-Gruppen in den endständigen Einheiten.

Bevorzugte Fettsäuren oder Fettsäurederivate c) werden ausgewählt aus der Gruppe der gesättigten und ungesättigten Fettsäuren mit 8 bis 22 C-Atomen, deren Metallseifen, deren Amide sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden und mit Polyhydroxyverbindungen.

Besonders bevorzugte Fettsäuren sind n-Dodecansäure, n-Tetradecansäure, n-Hexadecansäure, n-Octadecansäure sowie 9-Dodecensäure. Besonders bevorzugte Metallseifen sind die der bevorzugten C₈- bis C₂₂-Fettsäuren mit Metallen der 1. bis 3. Hauptgruppe, insbesondere Lithium, Natrium, Kalium, Magnesium, Calcium oder Aluminium, bzw. 2. Nebengruppe des PSE, insbesondere Zink, sowie mit Ammoniumverbindungen. Besonders bevorzugte Fettsäureamide sind die mit Mono- oder Diethanolamin und den obengenannten C₈- bis C₂₂-Fettsäuren erhältlichen Fettsäureamide. Besonders bevorzugte Fettsäureester sind die C₁- bis C₁₄-Alkylester und -Alkylarylester der genannten C₈- bis C₂₂-Fettsäuren, vorzugsweise Methyl-, Ethyl-, Propyl-, Butyl-, Ethylhexyl-Ester sowie der Benzylester. Besonders bevorzugte Fettsäureester sind auch die Mono-, Di- und Polyglykolester der C₈- bis C₂₂-Fettsäuren. Weitere besonders bevorzugte Fettsäureester sind die Mono- und Diester von Polyglykolen und/oder Polyalkylenglykolen mit bis zu 20 Oxyalkylen-Einheiten, wie Polyethylenglykol und Polypropylenglykol. Besonders bevorzugt sind auch die Mono-, Di- und Tri-Fettsäureester des Glycerins mit den genannten C₈- bis C₂₂-Fett-säuren, sowie die Mono-, Di- und Tri-Fettsäureester von Mono-, Di- und Triethanolamin mit den genannten C₈- bis C₂₂-Fettsäuren. Besonders bevorzugt sind auch die Fettsäureester von Sorbit und Mannit. Am meisten bevorzugt sind die C₁- bis C₁₄-Alkylester und Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Der Anteil der Organosiliziumverbindungen b) oder der Anteil der Fettsäuren oder Fettsäurederivate c) sowie der Anteil von Gemischen aus b) und c) beträgt jeweils bevorzugt 0,1 bis 30 Gew.-%, besonders bevorzugt 1 bis 20 Gew.-% und am meisten bevorzugt 1 bis 10 Gew.-%, wobei sich die Angaben in Gew.-% jeweils auf das Gesamtgewicht von Polyner a) beziehen.

Die Herstellung von hydrophoben Polymerzusammensetzungen in Form von in Wasser redispergierbaren Pulvern ist dem Fachmann bekannt und beispielsweise in der EP-A 1763553 beschrieben.

Bevorzugt ist auch der Einsatz von Gemischen aus mindestens zwei Polymeren, mindestens zwei hydrophoben Polymerzusammensetzungen oder ein oder mehreren Polymeren mit einer oder mehreren hydrophoben Polymerzusammensetzungen. Bevorzugte Gemische enthalten hierbei ein oder mehrere Homo- oder Mischpolymerisate von Vinylestern und ein oder mehrere Homo- oder Mischpolymerisate von Vinylhalogeniden, insbesondere im Verhältnis 2 zu 1 bis 1 zu 2.

Vorzugsweise werden als Polymere in Form von in Wasser redispergierbaren Pulver auch ein oder mehrere vernetzbare, in Wasser redispergierbare Polymerpulver-Zusammensetzungen eingesetzt. Vernetzbare, in Wasser redispergierbare Polymerpulver-Zusammensetzungen sind erhältlich, indem vor und/oder während der Polymerisation der oben genannten Monomere zur Herstellung der Polymere, und/oder vor der Trocknung der so erhaltenen Polymerdispersion, ein oder mehrere Epoxidharze zugegeben werden, und gegebenenfalls nach der Trocknung ein oder mehrere, mit dem Epoxidharz vernetzende Härter zugegeben werden. Die Herstellung von vernetzbaren, in Wasser redispergierbaren Polymerpulver-Zusammensetzungen ist beispielsweise aus der DE-A 102009000537 bekannt. Die vernetzbaren Polymerpulver-Zusammensetzungen enthalten vorzugsweise weniger als 5 Gew.-% an Polymeren enthaltend ethylenisch ungesättigte Gruppen.

Unter Epoxidharz sind, vorzugsweise nicht radikalisch polymerisierbare, Epoxidverbindungen mit mindestens zwei Epoxidgruppen pro Molekül zu verstehen. Die Epoxidverbindungen können aliphatischer, araliphatischer oder aromatischer Natur sein. Beispielsweise Epoxidverbindungen vom Bisphenol-A-Typ, das heißt Kondensationsprodukte von Bisphenol-A und Epichlorhydrin oder Methylepichlorhydrin. Geeignet sind auch Epoxidharze auf Basis von Bisphenol-F, welche im allgemeinen eine Mischung von Bisglycidyloxyphenylmethanen enthalten. Weitere Beispiele sind aliphatische Epoxidverbindungen wie Glycidylether von aliphatischen Polyolen, insbesondere der Butyldiglycidylether; cycloaliphatische Epoxidharze wie Vinylcyclohexandioxid, Dicyclopentadiendioxid und 3,4-Epoxy-6-methyl-cyclohexylmethyl; und heterocyclische Epoxidverbindungen wie TriglycidylIsocyanurat. Derartige Epoxidharze sind im Handel erhältlich, beispielsweise die Bisphenol-A- und Bisphenol-F-Typen als Epilox^{R}-Harze. Bevorzugt werden die Epoxidharze vom Bisphenol-A-Typ und Bisphenol-F-Typ.

Die Epoxidharze werden in einer Menge von 1 bis 50 Gew.-%, vorzugsweise 5 bis 30 Gew.-%, jeweils bezogen auf das Gesamtgewicht der Polymere, eingesetzt.

Geeignete mit dem Epoxidharz vernetzende Härter sind insbesondere solche, welche bei der Verarbeitungstemperatur von bauchemischen Produkten, d.h. im Regelfall bei Umgebungstemperatur, im Allgemeinen bei Temperaturen zwischen 0°C und 40°C, mit dem Epoxidharz vernetzen. Bevorzugt werden mit dem Epoxidharz vernetzende Amine. Bevorzugte Amine sind solche mit zwei oder mehr Aminogruppen, beispielsweise aliphatische Polyamine, Polyoxyalkylenamine, Polyethylenimine, Aminosilane und deren Kondensationsprodukte, aminofunktionelle Polyvinylalkohole. Besonders bevorzugt werden aliphatische Polyamine, welche unter den Handelsnamen Anquamine^{R} bzw. Epilink^{R} oder Epilox^{R}-Härter erhältlich sind, oder Polyoxyalkylenamine, welche unter den Handelsnamen Jeffamine^{R} erhältlich sind, oder Polyethylenimine, welche unter dem Handelsnamen Polyimin erhältlich sind. Besonders bevorzugt werden auch Aminosilane und deren Kondensationsprodukte. Geeignete Aminosilane sind beispielsweise die unter dem Handelsnamen Geniosil^{R} erhältlichen, wie N-(2-Aminoethyl)-(3-Aminopropyl)-trimethoxysilan (Geniosil GF 91), (3-Aminopropyl)-triethoxysilan (Geniosil GF 93), N-(2-Aminoethyl)(3-Aminopropyl)methyldimethoxysilan (Geniosil GF 95).

Die Einsatzmenge der mit dem Epoxidharz vernetzenden Härter hängt vom molaren Verhältnis der Epoxidgruppen zu den funktionellen Gruppen des Härters, vorzugsweise Aminogruppen, in der Polymerpulver-Zusammensetzung ab. Im Allgemeinen werden die Epoxid-haltigen Pulver und die Härter in einem solchen Mengenverhältnis eingesetzt, dass das molare Verhältnis von Epoxidgruppen zu den funktionellen Gruppen des Härters von 0,5 bis 2,0 beträgt.

Geeignete mineralische Bindemittel sind beispielsweise Zement, insbesondere Portlandzement, Aluminatzement, insbesondere Calcium-Sulfo-Aluminatzement, Trasszement, Hüttenzement, Magnesiazement, Phosphatzement, oder Hochofenzement, sowie Mischzemente, Füllzemente, Flugasche, Microsilica, Hüttensand, Kalkhydrat, Weißkalkhydrat, Calciumoxid (ungelöschter Kalk) und Gips. Bevorzugt werden Portlandzement, Aluminatzement und Hüttenzement, sowie Mischzemente, Füllzemente, Kalkhydrat, Weißkalkhydrat und Gips.

Beispiele für geeignete Füllstoffe sind Quarzsand, Quarzmehl, Kalksteinmehl, Calciumcarbonat, Dolomit, Ton, Kreide, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid, oder puzzolanisch reagierende Füllstoffe wie Flugasche, Metakaolin, Mikrosilica. Es können auch beliebige Gemische der genannten Füllstoffe eingesetzt werden.

Bevorzugt werden als Füllstoffe Quarzsand, Quarzmehl, Kalksteinmehl, Calciumcarbonat, Calciummagnesiumcarbonat (Dolomit), Kreide oder Weißkalkhydrat, vorzugsweise in Kombination mit Hartfüllstoffen und/oder puzzolanisch reagierende Füllstoffe. Besonders bevorzugt ist Kalksteinmehl, Quarzsand, Quarzmehl, vorzugsweise in Kombination mit Hartfüllstoffen und/oder puzzolanisch reagierenden Füllstoffen. Hartfüllstoffe bewirken eine Erhöhung der Oberflächen- und Verschleißfestigkeit der oberflächenbehandelten zementären Untergründe. Puzzolanisch reagierende Füllstoffe bewirken eine Erhöhung der Dichtigkeit und damit Festigkeit der oberflächenbehandelten zementären Untergründe.

Die Füllstoffe haben vorzugsweise mittlere Teilchendurchmesser von 0,01 bis 5 mm, vorzugsweise 0,05 bis 3 mm und besonders bevorzugt 0,1 bis 2 mm. Hartfüllstoffe werden vorzugsweise zu 0 bis 100 Gew.-% und besonders bevorzugt zu 10 bis 80 Gew.-% und am meisten bevorzugt zu 40 bis 50 Gew.-% eingesetzt, bezogen auf die Gesamtmenge der Füllstoffe. Puzzolanisch reagierende Füllstoffe werden vorzugsweise zu 0 bis 30 Gew.-% und besonders bevorzugt zu 5 bis 15 Gew.-% eingesetzt, je bezogen auf die Gesamtmenge der Füllstoffe.

Typische Rezepturen für die Trockenbaustoffe enthalten vorzugsweise 0,1 bis 100 Gew.-%, besonders bevorzugt 0,1 bis 20 Gew.-%, ganz besonders bevorzugt 0,5 bis 10 Gew.-% und am meisten bevorzugt 1 bis 6 Gew.-% Polymere in Form von in Wasser redispergierbaren Pulvern; 0 bis 70 Gew.-%, vorzugsweise 10 bis 50 Gew.-% und am meisten bevorzugt 20 bis 40 Gew.- mineralische Bindemittel; 0 bis 90 Gew.-%, vorzugsweise 20 bis 80 Gew.-% und besonders bevorzugt 50 bis 80 Gew.-% Füllstoffe; wobei sich die Angaben in Gew.-% auf das Trockengewicht der Trockenbaustoffe beziehen und sich insgesamt auf 100 Gew.-% addieren.

Die anwendungstechnischen Eigenschaften der Trockenbaustoffe können durch Additive oder Zusatzstoffe verbessert werden. Übliche Zusatzstoffe für Trockenbaustoffe sind Verdickungsmittel, beispielsweise Polysaccharide wie Celluloseether und modifizierte Celluloseether, Stärkeether, Guar Gum, Xanthan Gum, Schichtsilikate, Polycarbonsäuren wie Polyacrylsäure und deren Teilester, sowie Polyvinylalkohole welche gegebenenfalls acetalisiert oder hydrophob modifiziert sein können, Casein und assoziativ wirkende Verdicker. Übliche Zusatzstoffe sind auch Verzögerer, wie Hydroxycarbonsäuren, oder Dicarbonsäuren oder deren Salze, Saccharide, Oxalsäure, Bernsteinsäure, Weinsäure, Gluconsäure, Zitronensäure, Sucrose, Glucose, Fructose, Sorbit, Pentaerythrit. Gängige Zusatzstoffe sind auch Vernetzer wie Metall- oder Halbmetalloxide, insbesondere Borsäure oder Polyborate, oder Dialdehyde, wie Glutardialdehyd; übliche Additive sind Abbindebeschleuniger, beispielsweise Alkali- oder Erdalkalisalze von anorganischen oder organischen Säuren. Weitere Zusatzstoffe sind Pigmente, beispielsweise Titandioxid als norganisches Pigment, oder gängige organische Pigmente. Darüberhinaus sind noch zu nennen: Konservierungsmittel, Filmbildehilfsmittel, Dispergiermittel, Schaumstabilisatoren, Entschäumer, Verflüssiger, Fließmittel und Flammschutzmittel (z.B. Aluminiumhydroxid).

Im Allgemeinen beträgt der Anteil an Additiven und Zusatzstoffen an den Trockenbaustoffen insgesamt 0 bis 20 Gew.-%, vorzugsweise 0,1 bis 15 Gew.-% und besonders bevorzugt 0,1 bis 10 Gew.-%, jeweils bezogen auf das Trockengewicht der Trockenbaustoffe.

Die Herstellung der Trockenbaustoffe enthaltend ein oder mehrere Polymere und gegebenenfalls ein oder mehrere Komponenten aus der Gruppe umfassend mineralische Bindemittel, Füllstoffe und Additive ist an keine besondere Vorgehensweise oder Mischvorrichtung gebunden. Trockenbaustoffe sind erhältlich, indem die einzelnen Bestandteile der Rezeptur in herkömmlichen Pulvermischvorrichtungen vermischt und homogenisiert werden. Die einzelnen Bestandteile werden beim Mischen im Allgemeinen in trockener Form eingesetzt.

Ein weiterer Gegenstand der Erfindung sind Verfahren zur Oberflächenbehandlung von zementären Untergründen, indem
a) zementäre Massen auf Basis von Zement, Füllstoffen, Wasser und gegebenenfalls Polymeren und gegebenenfalls Additiven appliziert werden, dadurch gekennzeichnet, dass
b) die erfindungsgemäß eingesetzten Trockenbaustoffe auf die Oberfläche der zementären Untergründe aus Schritt a) aufgebracht werden, nachdem die zementären Massen zumindest teilweise erstarrt sind, jedoch bevor die zementären Massen vollständig abgebunden sind.

Ein weiterer Gegenstand der Erfindung sind oberflächenbehandelte zementäre Untergründe erhältlich durch Applikation von
a) zementären Massen auf Basis von Zement, Füllstoffen, Wasser und gegebenenfalls Polymeren und gegebenenfalls Additiven, dadurch gekennzeichnet, dass
b) die erfindungsgemäß eingesetzten Trockenbaustoffe auf die Oberfläche der zementären Untergründe aus Schritt a) aufgebracht werden, nachdem die zementären Massen zumindest teilweise erstarrt sind, jedoch bevor die zementären Massen vollständig abgebunden sind.

Beispiele für zementäre Untergründe sind Beton oder Estriche. Bei den Untergründen kann es sich um Böden, Wände, Decken oder sonstige Flächen handeln. In Schritt a) können als Zement, Füllstoffe, Polymere und Additive die oben genannten Komponenten in den oben genannten Mengen und zusätzlich 5 bis 50 Gew.-% Wasser, bezogen auf die Trockenkomponenten der zementären Massen eingesetzt werden. Bei den Füllstoffen der zementären Massen kann es sich auch um Kies oder Splitt handeln.

Vor Durchführung von Schritt b) kann erforderlichenfalls der Wassergehalt auf den zementären Untergründen korrigiert werden. Vorzugsweise enthält der zementäre Untergrund noch soviel Wasser, dass das Wasser gerade nicht über die Oberfläche des zementären Untergrunds übersteht. Überstehendes Wasser kann beispielsweise mechanisch, beispielsweise durch Abschieben, oder Absaugen entfernt werden. Erforderlichenfalls kann auch Wasser zugegeben, beispielsweise aufgesprüht oder aufgespritzt, werden, falls der noch nicht vollständig abgebundene zementäre Untergrund zu wenig Wasser enthalten sollte.

Die Trockenbaustoffe können in Schritt b) nach manuellen Verfahren oder maschinellen Verfahren appliziert werden. Bei Handverfahren werden die Trockenbaustoffe mit der bloßen Hand oder unter Einsatz von Hilfsmitteln, wie Becher oder Schaufeln, auf den zementären Untergrund gestreut. Bei maschinellen Verfahren werden die Trockenbaustoffe mittels Trockenspritzmaschinen oder vorzugsweise mittels Trockensprühmaschinen auf den zementären Untergrund aufgebracht. Diese Verfahren werden auch allgemein als Einstreuverfahren bezeichnet. Es können ein oder mehrere, vorzugsweise mindestens zwei und besonders bevorzugt zwei Schichten von Trockenbaustoffen übereinander aufgetragen werden. Die Trockenbaustoffe werden üblicherweise bei Umgebungstemperaturen appliziert, d.h. im Allgemeinen bei Temperaturen von 2 bis 50°C, insbesondere 10 bis 35°C.

Vorzugsweise werden 1 bis 20 kg, besonders bevorzugt 3 bis 5 kg Trockenbaustoff pro Quadratmeter eines zementären Untergrunds aufgebracht. Der Auftrag der Trockenbaustoffe auf die zementären Untergründe beträgt vorzugsweise 10 ≤ mm und besonders bevorzugt 3 ≤ mm.

Vorzugsweise werden in einem Schritt c) im Anschluss an den Auftrag von Trockenbaustoffen in Schritt b) die Oberfläche des oberflächenbehandelten zementären Untergrundes geglättet oder die aufgetragenen Trockenbaustoffe einmassiert. Auf diese Weise kann die Gleichmäßigkeit des Auftrags und die Integration der Trockenbaustoffe in die zementären Untergründe verbessert werden. Das Glätten kann beispielsweise mit einer Glättscheibe oder Flügelglättern erfolgen. Das Auftragen von Trockenbaustoffen und das Glätten können bei Einsatz von maschinellen Verfahren in einem einzigen Arbeitsschritt erfolgen.

Im Anschluss an Schritt b) oder gegebenenfalls nach Schritt c) erfolgt im Allgemeinen eine Nachbehandlung (Schritt d)). Hierzu kann eine Folie, üblicherweise eine Kunststofffolie, wie Polyvinylchlorid, insbesondere Polyethylen oder Polypropylen, auf den oberflächenbehandelten zementären Untergrund ausgelegt werden. Alternativ kann eine wässrige Dispersion eines Polymers (Polymerdispersion) aufgesprüht werden, beispielsweise ein Styrolbutadien-Copolymer (SBR), Polyvinylidenchlorid-Copolymer (PVDC) oder Styrolacrylat-Copolymer (SA). Der Feststoffgehalt der Polymerdispersion beträgt üblicherweise 10 bis 70%. Derartige Polymerdispersionen bilden dann eine wasserdampfundurchlässige Membran, die auch unter dem Fachbegriff curing membran bekannt ist.

Die Nachbehandlung trägt dazu bei, dass der oberflächenbehandelte Untergrund vollständig aushydratisiert bzw. vollständig abbindet und das Wasser nicht zu frühzeitig austritt. Zu frühzeitiges Austrocknen kann die Oberflächenfestigkeiten des zementären Untergundes verringern und sogar zu einer Ablösung der obersten Schicht des zementären Untergrundes führen.

Nach Abschluss des erfindungsgemäßen Verfahrens und nach vollständiger Aushärtung bzw. vollständigem Abbinden der zementären Untergründe sind die Trockenbaustoffe im Wesentlichen in den zementären Untergründen integriert; d.h. die Trockenbaustoffe bilden auf den vollständig abgebundenen zementären Untergründen im Allgemeinen keine eigenständige Schicht; bzw. die Schichtdicke der vollständig abgebundenen zementären Untergründe wird durch Schritt b) des erfindungsgemäßen Verfahrens im Allgemeinen nicht beeinflusst. Ohne an eine Theorie gebunden zu sein, wird angenommen, dass die Bestandteile der Trockenbaustoffe im Bereich der Oberfläche der zementären Untergründe angereichert und dadurch die Oberflächeneigenschaften der zementären Untergründe verbessert werden. Eine Zugabe der Bestandteile der Trockenformulierungen zu den zementären Massen zur Herstellung der zementären Untergründe führt nicht zu den erfindungsgemäßen Produkten.

Die Trockenbaustoffe können ganz allgemein zur Herstellung von beständigen Deckschichten oder als Oberflächenhärter verwendet werden. Das erfindungsgemäße Verfahren kann im Innenbereich, überdachten Außenbereich oder auch exponierten Außenbereich eingesetzt werden. Bei den oberflächenbehandelten zementären Untergründe kann es sich beispielsweise um Böden jeglicher Art handeln, wie um industrielle Böden, insbesondere Böden in Fabriken, Depots, Lager oder Labore, Böden von öffentlichen Gebäuden, insbesondere Böden in Krankenhäusern, Schulen oder Einkaufszentren, Garagenböden, insbesondere von Tiefgaragen oder Parkdecks, oder allgemein um Böden von Korridoren.

Durch die erfindungsgemäße Verwendung der Trockenbaustoffe werden überraschenderweise oberflächenbehandelte zementäre Untergründe mit verbessertem mechanischen Eigenschaftsprofil, insbesondere einer höheren Abriebsbeständigkeit zugänglich. Zugleich haben die erfindungsgemäßen zementären Untergründe eine geringere Verschmutzungsneigung, sogar gegen Öle oder Fette. Unerwarteterweise konnte die Verschmutzungsneigung durch Einsatz hydrophob modifizierter Polymerzusammensetzungen verringert werden. In Folge der Redispergierbarkeit der Polymere in Wasser werden die Polymere im Zuge der Durchführung des erfindungsgemäßen Verfahrens redispergiert und es kommt zu einer vorteilhaften Verteilung der Polymere im Oberflächenbereich der zementären Untergründe, so dass die Poren in den zementären Untergründen in effizienter Weise verschlossen werden. Mit entsprechendem Einsatz von Polymere, die nicht in Wasser redispergierbar sind, tritt dagegen vorwiegend eine Verfilmung an der Oberfläche der zementären Untergründe auf, so dass die erfindungsgemäßen Effekte nicht oder bei weitem weniger effizient auftreten. Auch bei Einsatz von wässrigen bzw. flüssigen Formulierungen zur Oberflächenbehandlung werden die erfindungsgemäß erzielten vorteilhaften Effekte nicht erreicht.

Die folgenden Beispiele dienen der detaillierten Erläuterung der Erfindung und sind in keiner Weise als Einschränkung zu verstehen.

### Herstellung der Probekörper:

Zur Herstellung von zementären Massen wurde eine Rezeptur auf Basis folgender Bestandteile eingesetzt:
99 Gew.-% Estrichbeton B25 nach DIN 1045
1 Gew.-% Abbindebeschleuniger
sowie 9,5 Gew.-% Wasser, bezogen auf die Trockenmasse der Bestandteile der Rezeptur.

Mischen der Komponenten der vorgenannten Rezeptur in einem Labormischer ergab einer zementäre Masse. Die zementäre Masse wurde in eine Schalung mit eine Grundfläche von 50 cm x 50 cm und einer Höhe von 5 cm gegeben und durch mehrmaliges Rütteln auf einem Vibrationstisch kompaktiert und anschließend geglättet.

Die erfindungsgemäß geforderte Begehbarkeit bzw. der erfindungsgemäße Abbindegrad oder Abbindeparameter des jeweiligen zementären Untergrundes war nach 2 Stunden Lagerung unter Normalbedingungen nach DIN50014 erreicht.

Zur Oberflächenbehandlung der zementären Untergründe wurden Trockenformulierungen auf Basis folgender Bestandteile eingesetzt:

| | |
|---|---|
| Zement CEM I 52,5 R: | 300 Gew.-Teile, |
| Microsilica 955 U | 50 Gew.-Teile, |
| Basalt 0-2 | 300 Gew.-Teile, |
| Quarzsand F31 | 200 Gew.-Teile, |
| Quarzsand AKW HR0,7-1,2T (Nr.5) | 150 Gew.-Teile |

und gegebenenfalls ein in Wasser redispergierbares Polymerpulver entsprechend der Angaben in Tabelle 1,
wobei sich die Angaben in Gew.-Teilen jeweils auf das Gesamtgewicht der jeweiligen Trockenformulierung beziehen.

Die jeweilige Trockenformulierung wurde in einer Menge von 4 kg/m² auf den jeweiligen zementären Untergrund manuell gleichmäßig aufgestreut. Durch Aufnahme von im zementären Untergrund enthaltenen Restwasser benetzte sich die jeweilige Trockenformulierung. Die Oberfläche des so behandelte Untergrundes wurde mit einer Spachtel geglättet und mit einer Polyethylen-Folie abgedeckt und anschließend 3 Tage bei Normalbedingungen nach DIN50014 gelagert.

Auf diese Weise wurden unter Einsatz der jeweiligen Trockenformulierung der (Vergleichs)Beispiele ((V)Bsp.) 1 bis 6 entsprechende (Vergleichs)Probekörper ((V)Probe) 1 bis 6 erhalten.

**Tabelle 1: In den Trockenformulierungen eingesetzte Polymere:**

| | VBsp.1 | Bsp. 2 | Bsp. 3 | Bsp. 4 | Bsp. 5 | Bsp. 6 |
|---|---|---|---|---|---|---|
| Polymer-1* [Gew.-Teile] | 0 | 1 | 2 | 5 | 0 | 3 |
| Polymer-2** [Gew.-Teile] | 0 | 0 | 0 | 0 | 5 | 2 |

| | | | | | | |
|---|---|---|---|---|---|---|
| *: in Wasser redispergierbares, Polyvinylalkohol-stabilisiertes Polymerpulver auf Basis von Vinylacetat und Ethylen mit einer Glasübergangstemperatur Tg von 16°C; **:in Wasser redispergierbares, Polyvinylalkohol-stabilisiertes, hydrophobiertes Polmyerpulver auf Basis von Vinylchlorid, Vinyllaurat und Ethylen. | | | | | | |

### Bestimmung der Abriebsbeständigkeit der Probekörper:

Die Abriebsbeständigkeit des jeweiligen Probekörpers wurde nach EN 13892 Teil 5 ("Bestimmung des Widerstands gegen Rollbeanspruchung von Estrichen für Nutzschichten") bestimmt. Die Ergebnisse sind in Tabelle 2 aufgeführt.

**Tabelle 2: Ergebnisse der Austestung der Abriebsbeständigkeit:**

| | VProbe 1 | Probe 2 | Probe 3 | Probe 4 | Probe 5 | Probe 6 |
|---|---|---|---|---|---|---|
| Abriebszyklen | 2930 | 2930 | 2936 | 10000 | 2930 | 10000 |
| Abriebsmenge [g] | 14,4 | 14,2 | 4,1 | 2,8* | 10,4 | 3,9 |

Aus der Austestung des Vergleichsprobekörpers 1 und der Probekörper 2, 3 und 5 geht hervor, dass durch die erfindungsgemäße Vorgehensweise der Abrieb verringert wird (Tabelle 2: VProbe 1 und Probe 2, 3 und 5). Eine Erhöhung des Polymergehaltes der Trockenformulierungen führt zu einer Verringerung der Abriebsmenge, selbst wenn die Abriebszyklen, d.h. die Abriebsbeanspruchung erhöht werden (Tabelle 2: Proben 2 und Probe 4). Auch der Einsatz von hydrophobierten Polymerpulvern führt zu einer Verringerung der Abriebsmenge (Tabelle 2: VProbe 1 und Probe 5). Der Abrieb wird durch gemeinsamen Einsatz von hydrophobierten und nicht hydrophobierten Polymerpulvern noch weiter verringert (Tabelle 2: Probe 5 und Probe 6).

### Bestimmung der Verschmutzungsneigung der Probekörper:

Es wurde je ein Fleck Ketchup, Senf, Öl bzw. Balsamico auf den jeweiligen Probekörper aufgetragen. Nach 24 Stunden Lagerung unter Normalbedingungen nach DIN50014 wurde die so behandelte Oberfläche des jeweiligen Probekörpers mit Wasser abgespült und nach Trocknung der Verschmutzungsgrad der Oberfläche des jeweiligen Probekörpers visuell an Hand des folgenden Schulnotensystems beurteilt (Tabelle 3) :
1 = keinerlei Verschmutzungsrückstände erkennbar;
2 = im Falle von ein oder zwei Substanzen geringe Spuren von Verschmutzungsresten erkennbar;
3 = im Falle von drei oder vier Substanzen geringe Spuren von Verschmutzungsresten erkennbar;
4 = Verschmutzungsreste von allen vier Substanzen auf der Oberfläche gut erkennbar;
5 = alle vier aufgebrachten Substanzen sind sehr stark in den Probekörper eingedrungen; Verschmutzungsreste von allen vier Substanzen zeichnen sich auf der Oberfläche des Probekörper sehr deutlich ab.

**Tabelle 3: Ergebnisse zur Verschmutzungsneigung:**

| | VProbe 1 | Probe 2 | Probe 3 | Probe 4 | Probe 5 | Probe 6 |
|---|---|---|---|---|---|---|
| Verschmutzungsgrad | 5 | 4 | 4 | 3 | 2 | 3 |

Aus Tabelle 3 geht hervor, dass durch die erfindungsgemäße Vorgehensweise und in besonderem Maße bei Einsatz von hydrophobierten Polymerpulvern die Verschmutzungsneigung der Probekörper verringert wird.

## Patentansprüche

1. Verwendung von Trockenbaustoffen enthaltend ein oder mehrere Polymere in Form von in Wasser redispergierbaren Pulvern, wobei die Polymere auf einem oder mehreren ethylenisch ungesättigten Monomeren basieren, und gegebenenfalls mineralische Bindemittel, gegebenenfalls Füllstoffe sowie gegebenenfalls Additive zur Oberflächenbehandlung von noch nicht vollständig abgebundenen zementären Untergründen,
wobei die noch nicht vollständig abgebundenen zementären Untergründe durch einen Abbindeparameter charakterisiert sind, gemäß dem ein Körper, der eine Grundfläche von 350 bis 400 cm² und eine Höhe von 20 cm sowie eine Masse von 60 kg hat, 30 Sekunden nach Ablegen mit seiner Grundfläche auf einen noch nicht vollständig abgebundenen zementären Untergrund unter Normalbedingungen nach DIN50014 um 0,1 bis 5 mm in den zementären Untergrund einsinkt.

2. Verwendung von Trockenbaustoffen nach Anspruch 1, **dadurch gekennzeichnet, dass** als Polymere Polymerisate von einem oder mehreren ethylenisch ungesättigten Monomeren ausgewählt aus der Gruppe umfassend Vinylester, (Meth)acrylsäureester, Vinylaromaten, Olefine, 1,3-Diene und Vinylhalogenide eingesetzt werden.

3. Verwendung von Trockenbaustoffen nach Anspruch 1 oder 2, **dadurch gekennzeichnet, dass** als Polymere ein oder mehrere hydrophobe Polymerzusammensetzungen in Form von in Wasser redispergierbaren Pulvern eingesetzt werden.

4. Verwendung von Trockenbaustoffen nach Anspruch 1 bis 3, **dadurch gekennzeichnet, dass** mindestens zwei Polymere oder mindestens zwei hydrophobe Polymerzusammensetzungen oder ein oder mehrere Polymere und ein oder mehrere hydrophobe Polymerzusammensetzungen eingesetzt werden, wobei die genannten Polymere oder hydrophoben Polymerzusammensetzungen jeweils in Form von in Wasser redispergierbaren Pulvern.vorliegen.

5. Verwendung von Trockenbaustoffen nach Anspruch 1 bis 4, **dadurch gekennzeichnet, dass** die Füllstoffe ausgewählt werden aus der Gruppe umfassend Quarzsand, Quarzmehl, Kalksteinmehl, Calciumcarbonat, Dolomit, Ton, Kreide, Weißkalkhydrat, Talkum, Glimmer und Gummigranulat, und vorzugsweise in Kombination mit Hartfüllstoffen und/oder puzzolanisch reagierenden Füllstoffen eingesetzt werden.

6. Verwendung von Trockenbaustoffen nach Anspruch 1 bis 5, **dadurch gekennzeichnet, dass** die Trockenbaustoffe 0,1 bis 100 Gew.-% Polymere in Form von in Wasser redispergierbaren Pulvern, 0 bis 70 Gew.-% mineralische Bindemittel, 0 bis 90 Gew.-% Füllstoffe enthalten, wobei sich die Angaben in Gew.-% auf das Trockengewicht der Trockenbaustoffe beziehen und sich insgesamt auf 100 Gew.-% addieren.

7. Verfahren zur Oberflächenbehandlung von zementären Untergründen, indem
a) zementäre Massen auf Basis von Zement, Füllstoffen, Wasser und gegebenenfalls Polymeren und gegebenenfalls Additiven appliziert werden, **dadurch gekennzeichnet, dass**
b) Trockenbaustoffe enthaltend ein oder mehrere Polymere in Form von in Wasser redispergierbaren Pulvern, wobei die Polymere auf einem oder mehreren ethylenisch ungesättigten Monomeren basieren, und gegebenenfalls mineralische Bindemittel, gegebenenfalls Füllstoffe sowie gegebenenfalls Additive auf die Oberfläche der zementären Untergründe aus Schritt a) aufgebracht werden, nachdem die zementären Massen zumindest teilweise erstarrt sind, jedoch bevor die zementären Massen vollständig abgebunden sind, so dass die zementären Untergründe durch einen Abbindeparameter charakterisiert sind, gemäß dem ein Körper, der eine Grundfläche von 350 bis 400 cm² und eine Höhe von 20 cm sowie eine Masse von 60 kg hat, 30 Sekunden nach Ablegen mit seiner Grundfläche auf einen noch nicht vollständig abgebundenen zementären Untergrund unter Normalbedingungen nach DIN50014 um 0,1 bis 5 mm in den zementären Untergrund einsinkt, und anschließend gegebenenfalls
c) die Oberfläche der oberflächenbehandelten zementären Untergründe geglättet werden und/oder die aufgetragenen Trockenbaustoffe einmassiert werden, und gegebenenfalls
d) auf die oberflächenbehandelten zementären Untergründe ein oder mehrere Folien aufgelegt oder ein oder mehrere wässrige Dispersionen von Polymeren aufgesprüht werden.

8. Verfahren zur Oberflächenbehandlung von zementären Untergründen nach Anspruch 7, **dadurch gekennzeichnet, dass** c) anschließend an Schritt b) von Anspruch 7 die Oberfläche der oberflächenbehandelten zementären Untergründe geglättet wird und/oder die aufgetragenen Trockenbaustoffe einmassiert werden.

9. Verfahren zur Oberflächenbehandlung von zementären Untergründen gemäß Anspruch 8, **dadurch gekennzeichnet, dass** d) auf die oberflächenbehandelten zementären Untergründe ein oder mehrere Folien aufgelegt oder ein oder mehrere wässrige Dispersionen von Polymeren aufgesprüht werden.

10. Verfahren gemäß Anspruch 7 bis 9, **dadurch gekennzeichnet, dass** in Schritt b) der Auftrag der Trockenbaustoffe auf die zementären Untergründen 10 ≤ mm beträgt.

11. Oberflächenbehandelte zementäre Untergründe erhältlich nach den Verfahren der Ansprüche 7 bis 10.

12. Oberflächenbehandelte zementäre Untergründe gemäß Anspruch 11, **dadurch gekennzeichnet, dass** es sich um Böden handelt.

## Claims

1. Use of dry building materials containing one or more polymers in the form of water-redispersible powders, where the polymers are based on one or more ethylenically unsaturated monomers, and optionally mineral binders, optionally fillers and optionally additives, for the surface treatment of cementitious substrates which have not yet fully set,
where the cementitious substrates which have not yet fully set are **characterized by** a setting parameter according to which a body which has a base area of from 350 to 400 cm² and a height of 20 cm and also a mass of 60 kg sinks into the cementitious substrate by from 0.1 to 5 mm, 30 seconds after it has been placed with its base area downward on a cementitious substrate which has not yet fully set, under standard conditions in accordance with DIN50014.

2. Use of dry building materials according to Claim 1, **characterized in that** polymers of one or more ethylenically unsaturated monomers selected from the group consisting of vinyl esters, (meth) acrylic esters, vinylaromatics, olefins, 1,3-dienes and vinyl halides are used as polymers.

3. Use of dry building materials according to Claim 1 or 2, **characterized in that** one or more hydrophobic polymer compositions in the form of water-redispersible powders are used as polymers.

4. Use of dry building materials according to any of Claims 1 to 3, **characterized in that** at least two polymers or at least two hydrophobic polymer compositions or one or more polymers and one or more hydrophobic polymer compositions are used, where said polymers or hydrophobic polymer compositions are in each case present in the form of water-redispersible powders.

5. Use of dry building materials according to any of Claims 1 to 4, **characterized in that** the fillers are selected from the group consisting of silica sand, quartz flour, ground limestone, calcium carbonate, dolomite, clay, chalk, white hydrated lime, talc, mica and granulated rubber and are preferably used in combination with hard fillers and/or pozzolanic fillers.

6. Use of dry building materials according to any of Claims 1 to 5, **characterized in that** the dry building materials contain from 0.1 to 100% by weight of polymers in the form of water-redispersible powders, from 0 to 70% by weight of mineral binders, from 0 to 90% by weight of fillers, where the figures in % by weight are based on the dry weight of the dry building materials and together add up to 100% by weight.

7. Process for the surface treatment of cementitious substrates, in which
a) cementitious compositions based on cement, fillers, water and optionally polymers and optionally additives are applied, **characterized in that**
b) dry building materials containing one or more polymers in the form of water-redispersible powders, where the polymers are based on one or more ethylenically unsaturated monomers, and optionally mineral binders, optionally fillers and optionally additives are applied to the surface of the cementitious substrates from step a) after the cementitious compositions have at least partially solidified but before the cementitious compositions have fully set so that the cementitious substrates are **characterized by** a setting parameter according to which a body which has a base area of from 350 to 400 cm² and a height of 20 cm and also a mass of 60 kg sinks into the cementitious substrate by from 0.1 to 5 mm, 30 seconds after it has been placed with its base area downward on a cementitious substrate which has not yet fully set, under standard conditions in accordance with DIN50014, and then optionally
c) the surface of the surface-treated cementitious substrates is smoothed and/or the dry building materials applied are massaged in and optionally
d) one or more films are laid onto the surface-treated cementitious substrates or one or more aqueous dispersions of polymers are sprayed on.

8. Process for the surface treatment of cementitious substrates according to Claim 7, **characterized in that** c) the surface of the surface-treated cementitious substrates is smoothed and/or the dry building materials applied are massaged in after step b) of Claim 7.

9. Process for the surface treatment of cementitious substrates according to Claim 8, **characterized in that** d) one or more films are laid onto the surface-treated cementitious substrates or one or more aqueous dispersions of polymers are sprayed on.

10. Process according to any of Claims 7 to 9, **characterized in that** the applied thickness of the dry building materials on the cementitious substrates in step b) is ≤ 10 mm.

11. Surface-treated cementitious substrates which can be obtained by the process of any of Claims 7 to 10.

12. Surface-treated cementitious substrates according to Claim 11, **characterized in that** they are floors.

## Revendications

1. Utilisation de matériaux de construction secs contenant un ou plusieurs polymères sous la forme de poudres redispersibles dans l'eau, les polymères étant à base d'un ou de plusieurs monomères éthyléniquement insaturés, et éventuellement des liants minéraux, éventuellement des charges et éventuellement des additifs pour le traitement de surface de substrats cimentaires encore non complètement pris,
les substrats cimentaires encore non complètement pris étant **caractérisés par** un paramètre de prise selon lequel un corps présentant une surface de base de 350 à 400 cm² et une hauteur de 20 cm et une masse de 60 kg s'enfonce 30 secondes après sa pose avec sa surface de base sur un substrat cimentaire encore non complètement pris en conditions normales selon DIN 50014 de 0,1 à 5 mm dans le substrat cimentaire.

2. Utilisation de matériaux de construction secs selon la revendication 1, **caractérisée en ce que** des polymères d'un ou de plusieurs monomères éthyléniquement insaturés choisis dans le groupe comprenant les esters de vinyle, les esters de l'acide (méth)acrylique, les composés aromatiques de vinyle, les oléfines, les 1,3-diènes et les halogénures de vinyle sont utilisés en tant que polymères.

3. Utilisation de matériaux de construction secs selon la revendication 1 ou 2, **caractérisée en ce qu'**une ou plusieurs compositions polymères hydrophobes sous la forme de poudres redispersibles dans l'eau sont utilisées en tant que polymères.

4. Utilisation de matériaux de construction secs selon les revendications 1 à 3, **caractérisée en ce qu'**au moins deux polymères ou au moins deux compositions polymères hydrophobes ou un ou plusieurs polymères et une ou plusieurs compositions polymères hydrophobes sont utilisés, les polymères ou compositions polymères hydrophobes cités se présentant à chaque fois sous la forme de poudres redispersibles dans l'eau.

5. Utilisation de matériaux de construction secs selon les revendications 1 à 4, **caractérisée en ce que** les charges sont choisies dans le groupe comprenant le sable de quartz, la farine de quartz, la farine de pierre à chaux, le carbonate de calcium, la dolomite, l'argile, la craie, l'hydrate de chaux blanche, le talc, le mica et un granulat de caoutchouc, et sont de préférence utilisées en combinaison avec des charges dures et/ou des charges à réaction pouzzolanique.

6. Utilisation de matériaux de construction secs selon les revendications 1 à 5, **caractérisée en ce que** les matériaux de construction secs contiennent 0,1 à 100 % en poids de polymères sous la forme de poudres redispersibles dans l'eau, 0 à 70 % en poids de liants minéraux, 0 à 90 % en poids de charges, les données en % en poids se rapportant au poids sec des matériaux de construction secs et s'additionnant au total pour atteindre 100 % en poids.

7. Procédé de traitement de surface de substrats cimentaires, selon lequel
a) des masses cimentaires à base de ciment, de charges, d'eau et éventuellement de polymères et éventuellement d'additifs sont appliquées, **caractérisé en ce que**
b) des matériaux de construction secs contenant un ou plusieurs polymères sous la forme de poudres redispersibles dans l'eau, les polymères étant à base d'un ou de plusieurs monomères éthyléniquement insaturés, et éventuellement des liants minéraux, éventuellement des charges et éventuellement des additifs sont appliqués sur la surface des substrats cimentaires de l'étape a) après la solidification au moins partielle des masses cimentaires, mais toutefois avant la prise complète des masses cimentaires, de manière à ce que les substrats cimentaires soient **caractérisés par** un paramètre de prise selon lequel un corps présentant une surface de base de 350 à 400 cm² et une hauteur de 20 cm et une masse de 60 kg s'enfonce 30 secondes après sa pose avec sa surface de base sur un substrat cimentaire encore non complètement pris en conditions normales selon DIN 50014 de 0,1 à 5 mm dans le substrat cimentaire, puis éventuellement
c) la surface des substrats cimentaires traités en surface est lissée et/ou les matériaux de construction secs appliqués sont massés, et éventuellement
d) une ou plusieurs feuilles sont appliquées ou une ou plusieurs dispersions aqueuses de polymères sont pulvérisées sur les substrats cimentaires traités en surface.

8. Procédé de traitement de surface de substrats cimentaires selon la revendication 7, **caractérisé en ce que** c) après l'étape b) de la revendication 7, la surface des substrats cimentaires traités en surface est lissée et/ou les matériaux de construction secs appliqués sont massés.

9. Procédé de traitement de surface de substrats cimentaires selon la revendication 8, **caractérisé en ce que** d) une ou plusieurs feuilles sont appliquées ou une ou plusieurs dispersions aqueuses de polymères sont pulvérisées sur les substrats cimentaires traités en surface.

10. Procédé selon les revendications 7 à 9, **caractérisé en ce qu'**à l'étape b), la couche des matériaux de construction secs sur les substrats cimentaires est de 10 ≤ mm.

11. Substrats cimentaires traités en surface pouvant être obtenus par le procédé selon les revendications 7 à 10.

12. Substrats cimentaires traités en surface selon la revendication 11, **caractérisés en ce qu'**il s'agit de sols.
